# EUROPEAN PATENT SPECIFICATION

(11) **EP 2 842 393 B1**
(45) Date of publication and mention of the grant of the patent: **16.01.2019**
(21) Application number: 13844565.5
(22) Date of filing: 19.04.2013
(51) Int. Cl.: H05B 33/08

(54) **APPARATUS AND METHOD OF SUPPLYING A LED STRING DIRECTLY FROM AN AC POWER GRID VOLTAGE**
GERÄT UND VERFAHREN ZUM VERSORGEN EINES LED STRANGS DIREKT MIT EINER AC NETZSPANNUNG
APPAREIL ET PROCÉDÉS POUR ALIMENTER UNE CHAÎNE DE DEL DIRECTEMENT AVEC UN CA TENSION DU SECTEUR

(30) Priority: 24.04.2012 RO 201200274; 03.07.2012 RO 201200490
(43) Date of publication of application: 04.03.2015
(73) Proprietor: RUS, Adrian Ioan, Balotesti, Ilfov County (RO)
(72) Inventor: RUS, Adrian Ioan, Balotesti, Ilfov County (RO)
(74) Representative: Fierascu, Cosmina-Catrinel
(86) International application number: PCT/RO2013/000009
(87) International publication number: WO 2014/077718

(56) References cited:
- US-A1- 2008 202 312
- US-A1- 2010 134 018
- US-A1- 2011 227 484
- US-A1- 2011 273 098
- US-A1- 2011 273 102
- US-A1- 2012 081 009
- US-B2- 8 035 307

## Description

### Technical field

Various embodiments relate generally to lighting systems that include light emitting diodes [LEDs]. The present invention refers to exemplary apparatus and associated methods to efficiently supply a LED string directly from the power grid by employing the LEDs themselves as current regulators, with electric efficiency in excess of 90%, compliant with EN61000-3-2 [IEC1000-3-2] and exhibiting the minimum theoretically possible flicker. The invention discloses the design algorithms too.

### Background

LED lighting benefit increased interest and technologic advances given the efficiency leaps in semiconductor industry. LEDs experience a pronounced un-linear current to voltage characteristic and thus requiring constant current supply. Their direct connection to the power grid have to mitigate two conflicting requirements: to generate harmonics below the mandatory limits and to be supplied by a current as constant as possible.

The classic approach of LEDs supply consists of dedicated SMPS [Switch Mode Power Supply] drivers which they employ with no exception, bulky transformes and chemical capacitors.

The functional approach of LEDs supply or the so called "Direct AC drive" use the voltage drop across LEDs during the regulating process.

All direct AC drivers flicker. As can be seen in Picture no.2 the current to voltage characteristic of the LED exhibit the so called "threshold voltage" below which the current through LED is virtually zero. The subsequent light "emitted" by the LED below the threshold is zero, too. Consistent with the voltage threshold of the singular LED, many series-connected LEDs exhibit a larger voltage threshold. It has been found that if the total number of LEDs connected in series/strings is dimensioned to resist to the maximum grid voltage, then the conducting and subsequent lighting time is just half the total time, the string being lit for some 5ms and un-lit for the next 5ms. The presence of voltage threshold and of the exponential current to voltage characteristic of LEDs, sink a heavily distorted sine current. Total harmonic distortions [THD] of the absorbed current exceed 78% and the subsequent power factor [PF] is less than 0.5

A series of specific methods to decrease the THD and to increase the PF have been developped. With no exception, all known functional solutions simulate the sinus shape of the ideal sink current. With no exception and absolutely erroneous, all known functional solutions engage in a race to better approximate the ideal sine shape of the sink current while once respected the harmonic limits imposed by standards, the race should be for less flicker and lower crest factor [CF].

As a collateral consequence of the current sine race, the crest factor [CF] of the current through LEDs in all known direct AC solutions exceed 1.41; in other words, the maximum current flowing through LEDs is by 41%+ higher than the average current. This CF exceeding 1.4 simply translate in flicker and in thermal oscillations. If taking into account that the light efficiency or LEDs decrease by the increase of current, the high CF decreases the overall conversion efficacy of energy from input electricity to output light, offseting the presumably [high] electric efficiency of the driver.

One known functional solution is described in the documentation of the DCLx118 integrated circuit family, produced by the Korean company, Innovision. Studying the available technical documentation, I came to notice that the solution employed by Innovision is one of discrete amplitude modulation [discrete AM] approximating/synthetizing the step sine function of the sink current. On a declarative basis not confirmed by own simulations it is EN61000-3-2 compliant; however it has a significant flickering [the light is off for some +/- 1.3ms around grid voltage zero crossing] and a crest factor higher than 1.41.

Another known functional solution is described in the documentation of the PC-R-101B integrated circuit family produced by the Korean company, Login Digital. The solution employed by Login Digital is also a discrete AM approximating the step sine function of the sink current. It is a higher power solution but not EN61000-3-2 compliant. Similar to the previous solution, it has a significant flickering [the light is off for some +/- 1.3ms around grid voltage zero crossing, namely a total lighting pause of 2.6ms] and a crest factor higher than 1.41.

Another known functional solution is described in the documentation of the Acriche 2. integrated circuit family, produced by the Korean company, Seoul Semiconductors. The solution employed by Seoul Semiconductors is also a discrete AM solution approximating the step sine function of the sink current. On a declarative basis not confirmed by own simulations it is EN61000-3-2 compliant, but exhibit the same significant flickering [the light is off for some +/- 1.3ms around grid voltage zero crossing] and a crest factor higher than 1.41.

Another known functional solution is described in the documentation of the LMC 10-11 module family produced by the Japanese company, Citizen. The solution employed by Citizen is a discrete AM completed based on US20110273098 patent and it's associated references through a current diversion scheme. Even though the solution synthetizes or approximates the sine shape of the sink current via two stages, it is a linear solution diverting [un-using] the current some 2/3 of total LED conduction time and therefore exhibiting a low electric efficiency [some 65%]. Moreover the crest factor of this solution is higher than 1.41. This solution also exhibits a significant flicker of approximately +/- 1.5ms around grid voltage zero crossing.

The technical solution disclosed in patent US20110273102 elegantly solves the EN61000-3-2/IEC1000-3-2 compliance by smoothing the sink current through a sinus shaped Voltage Controlled Sink Source [VCCS] placed in series with the switched LED segments. This solution employs a linear AM of the input current. The genuine sinusoidal shape of the sink current flowing through LEDs also causes a significant flicker and generate a CF equal to 1.41.

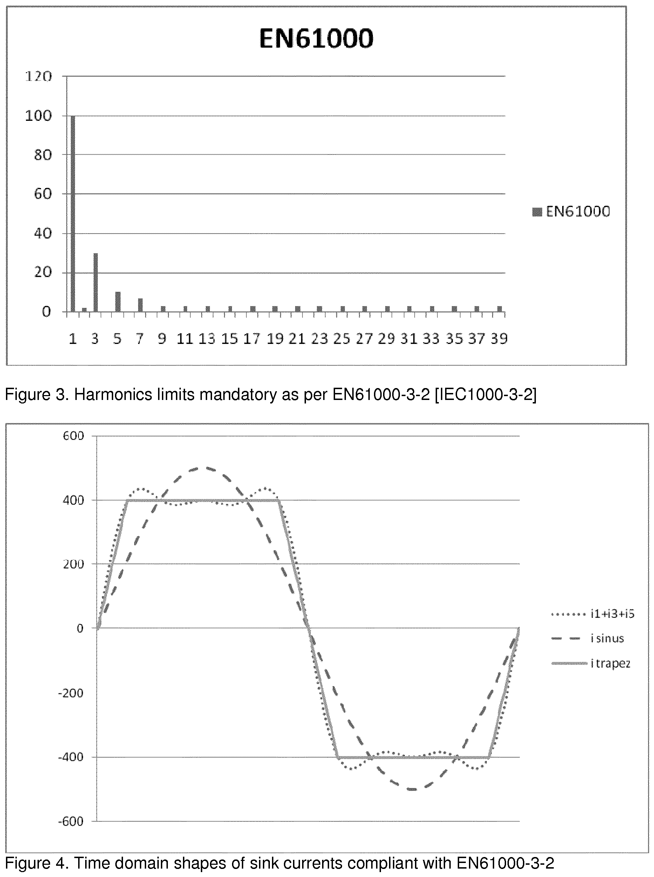

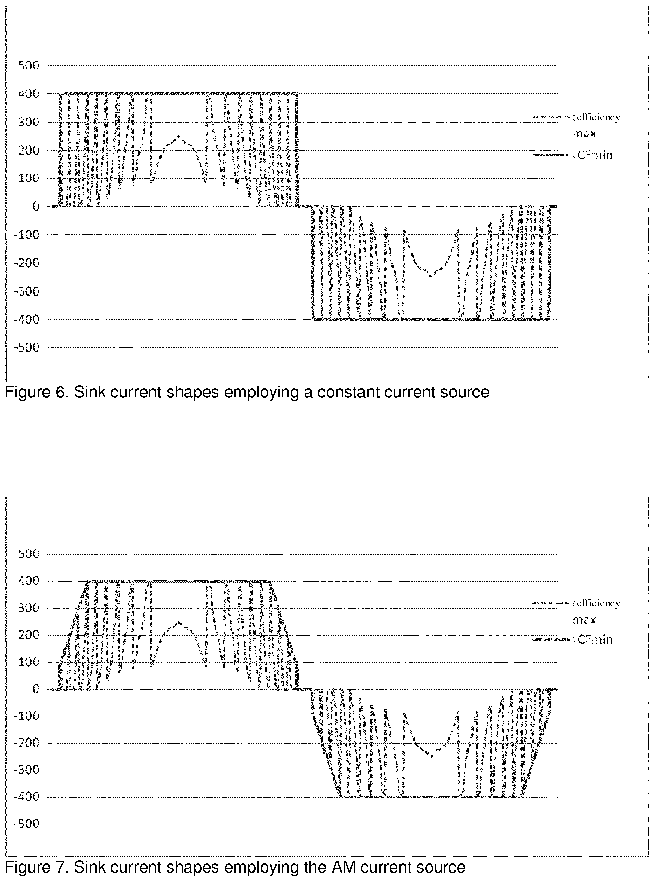

US8035307B2 discloses several apparatuses that convert alternating current to direct current for powering a plurality of LEDs. One such apparatus is disclosed in figure 4 and its corresponding sink current shape is shown in figure 6. Although the sink current shape is somehow similar [i.e. approximately trapezoidal] to the sink current shape according to the present invention, it does not solve the flickering and the EN61000-3-2 compliance problems. The solution disclosed in US8035307B2 merely solves the problem of increasing the duration for which the LEDs are operated under the maximum current drive.

The proposed solution extensively applies the mathematical principles and aparatus developed by the "optimal signal processing" for complex radar signals, shaping the parameters theoretically obtainable from specific wave forms and making the practical implementions as simple formalities.

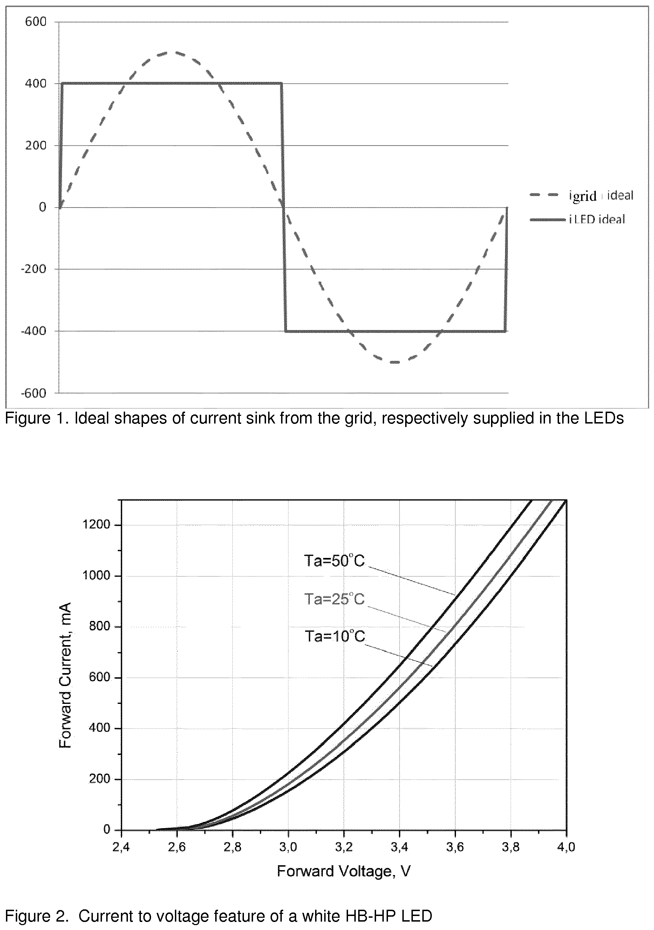

From LEDs perspective and given their exponential current to voltage characteristic, the ideal supplied current should be continuous. From the power grid perspective, the ideal sink current should be sine. The supply source or driver, irrespective of its technology, basically mitigates or concliliates between these two conflicting requirements, as seen in Figure 1, where we have considered the full wave rectification by default. Here an important observation needs to be done, namely the crest factor of the ideal sine sink current [CF] equals 1.41 and the CF of the continous current supplied to LEDs equals 1. The CF is an extremely important parameter in saving the LEDs optical efficiency, being known that upon doubling the current through LED, it's optical efficiency drops by some 10%. I mark [1] the above CF condition.

The amplitudes level of harmonic nature that can be injected in public networks by lighting equipment is set by the EN61000-3-2 [IEC1000-3-2] standard, these amplitude maximum values being indicated in Figure 3. From this perspective, EN61000-3-2 sets the maximum harmonic levels to be accepted by the electricity producers and carriers within which the consumer can perform any optimization based on any useful criteria.

To identify the time domain shapes of sink current eligible from the EN61000-3-2, I apply the reverse Fourier transform to a current defined by its harmonic amplitudes within the EN61000-3-2 mandatory limits. As EN61000-3-2 defines just the amplitude limits and not their phases, the reverse Fourier transform will generate several time domain solutions. Ranging the amplitudes of the harmonics within zero and their max levels imposed by EN61000-3-2 and ranging their phases between zero and 360 degrees, the time domain solution closest to the ideal LED sink current is the one coming from only 3 harmonics: the fundamental harmonic in phase with its 3rd harmonic having the amplitude equal to 30% of fundamental amplitude and respectively in phase with its 5th harmonic having the amplitude equal to 10% of fundamental amplitude, as showed in Figure 4. Now it can be asserted that if the time domain shape of sink current is located between "i1+i3+i5" and "i sinus" curves, then the amplitudes of its harmonics stays below the limits imposed by EN61000-3-2. More, given that the flickering drops by increasing the current slope, the minimum flicker AND EN61000-3-2 eligible shape is obtained when the sink current shape is identical with the left limit of the above identified geometrical place. Any kind of slope lowering is done on the account of flicker increase. By technical reasons I decide to choose the simplest sink current shape as the simplified wave form marked as "i trapezoid" in Figure 4. This form of trapezoid wave has a crest factor of 1.12. Given the crest factor also drops by increasing the current slope, the current shape ensuring the minimum flicker also ensures the minimum crest factor. Referred to this trapezoid simplified shape, any slope decrease is done on the account of increasing the crest factor, respectively any slope increase will get the harmonics content outside the limits set by EN61000-3-2. I mark [2] the above shape conformity condition.

The two cumulative conditions [1] and [2] suggest the physical implementation of the identified math solution by two independent functional modules, as following: one module creating a rectangular sink current pulse by a required maximum electric efficiency and respectively one module shaping the sink current [or it's mean value] to a form compliant with EN61000-3-2 by clipping out certain gradients from the rectangular pulse through modulation.

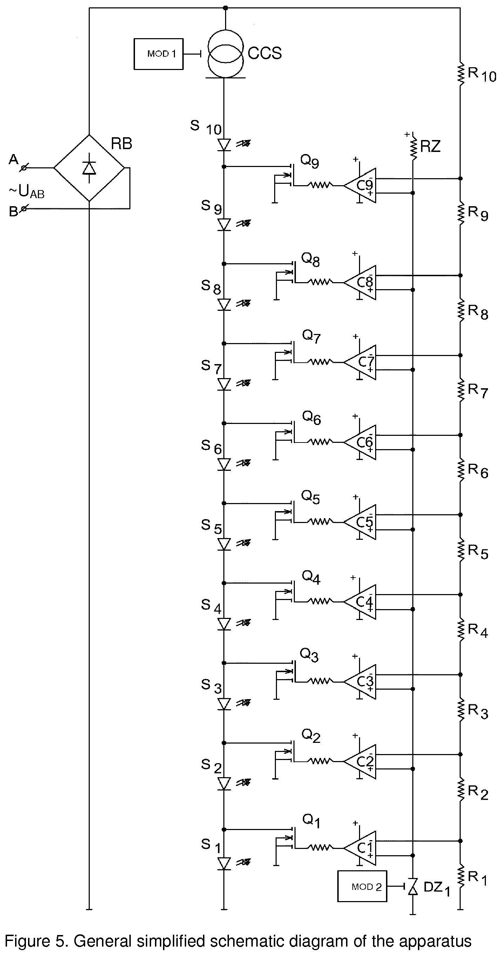

The proposed module meant to achieve the desired efficiency of electric energy transfer is made by a number of LEDs arranged in a N x M topology [N segments x M LEDs in series] where each of the segments are consecutive introduced or taken out a serial string based on a certain voltage drop on the second module. By choosing the voltage tresholds the switch of each of the N segments occure it derives the total energetic efficiency of the apparatus. The electrical schematic diagram is depicted in Figure 5. The schematic generates the most efficient, theoretically possible, rectangular current pulse, in phase with the grid voltage and symmetrically centered on it.

The EN61000-3-2 compliance is achieved by modulating the real time or the mean sink current to a trapezoid shape through the second module placed in series with the first one. The particular modulation techniques lead to particular technical solutions, as following:
Method 1, amplitude modulation: the envelope of sink current is continuously / linear modified by amplitude variation in the time domain. The amplitude of sink current increases between 0 and 1.4 ms with a slope twice as big as the slope of the sin(50Hz) function, is constant between 1.4 ms and 8.6 ms, respectively decrease between 8.6 ms and 10 ms, with a slope twice as big as the slope of the sin(50Hz) function on the same timeframe.
Method 2, PWM modulation or High Frequency [HF] PWM: the envelope of sink current is chopped with pulses having variable widths [Pulse Width Modulation]. The mean of sink current increases between 0 and 1.4ms and respectively decreases between 8.6ms and 10ms intervals, with the PWM modulation law, having the slope twice as big as the slope of sin (50Hz) function on the same time frame. The mean of sink current stay flat between 1.4ms and 8.6ms.
Method 3, intrinsec PWM modulation or Low Frequency [LF] PWM: observing the sink current rectangular pulse is made of by a series of pulses, it has been found that by choosing the right switching thresholds in the 0-1.4ms, respectively 8.6-10ms intervals, the schematic can intrinsically generate a series of pulses of variable length. By further selecting the switching tresholds the above pulses will approximate the method 2 HF PWM modulating law, the mean of sink current being twice the mean of sine current on the intervals of interest [0 to1.4ms and respectively 8.6 to 10ms].
Method 4, random modulation: the mean sink current envelope is modulated by randomly modulating the position of fronts of rectangular pulses. By choosing the right probability distribution law ANY mean envelope can be obtained, including the sine one; given that the main purpose of the aparatus is to ensure a CF as close as possible to 1, the proper distribution law generating the needed trapezoidal envelope of the mean sink current have a uniform probability density between 0ms and 1.4ms and respectively between 8.6ms and 10ms intervals, being 1 in between. The result of the random modulation is a sink current whose mean follows the trapezoidal shape as depicted in Figure 4.

The engineering issue this invention solves is the efficient and with a quasicontinuous current supply of the LEDs directly from the 230Vca public network [the so called direct AC solution or driver], exhibiting the minimum flicker likely to be achieved in theory with direct AC solutions.

The apparatus according to the invention:
eliminates the disadvantages of the known technical solutions by minimizing the associated flickering and strobe effect incidental to all "direct AC" solutions up to the minimal level likely to be achieved in theory by the direct AC solutions, is compliant with the EN61000-3-2 harmonic pollution standard, respectively it provides the LEDs an operating mode in quasi constant current, with a crest factor of only 1.14 [namely through the LEDs a current of only 14% higher than the average current flows through], exploiting the discrete feature of the LEDs, it generates harmonics below the maximum levels imposed by EN61000-3-2, is subject to an efficiency up to 99%, it does not contain chemical [electrolytic] capacitors and thus its lifespan is higher than the LEDs lifespan, it does not contain inductive reactances and therefore its sectional sizes are minimal [under 3mm].

The method pursuant to the invention eliminates the disadvantages of the known solutions, that is, it allows the quick sizing and check via simple energy determinations, it allows the independent optimization of the efficiency, the flicker and compliance with EN6100-3-2 and is fully adapted to the discrete nature of the source of light consisting of a plurality of LEDs, allowing the virtual modelling of any efficiency up to 99%, it has minimal cross-cut sizes [with a thickness below 3mm] lending itself to carrying out heavy-duty lighting apparatus, ultra thin and/or embedded in the LED module, it generates harmonic levels inferior to the limits mandatory by EN61000-3-2 and it allows the achievement of light sources which does not contain electrolytic capacitors, thus having a lifespan similar or higher than the lifespan of the LEDs.

Hence the invention shows the following advantages:
It allows the simple 2 wires supply of light engines directly from the 230V_{ca} [or any other given standard values like 110V/277V public networks]
It supplies the LEDs with a quasi-constant current, the peak level being only by 14% higher than the average current;
It allows the independent sizing of the strobe/flickering effect up to the minimal value reachable via "direct AC" functional solutions, compliant with EN61000-3-2;
It allows the independent sizing of the harmonics injected back into the grid, of the total harmonic distortion and subsequent of the harmonic power factor;
It has a Displacement Power Factor [DPF] equal to 1;
It does not contain coils, transformers or electrolytic capacitors, but only miniature/minuaturizable components [semiconductors, ceramic capacitors and resistors] thus allowing the achievement of some ultra thin lighting apparatus, embeddable on the light engine, having only two supply terminals to be plugged directly onto the public network.

The lifespan is similar to the LED lifespan.

The method preserves the following disadvantages present at all offline solutions direct AC solutions:
It does not observe the labour security standard at direct voltage [SELV], for 230V_{ac} grids the direct voltage inside the driver reaching up to 400V_{cc}, wherefore the modules must be sealed in so that they do not allow the accidental contact of the circuit elements under voltage.
It is not galvanically isolated by the grid network and there is a risk of the electric shock upon working inside it while connected to the grid. Given this, it is prohibited to work inside the apparatus/to dismantle the LED module while it is connected to the grid.
For the given voltage of the public network [110V/230V/277V], the number of LEDs is set.

### Detailed description of the invention

Hereinafter is an example of sizing and accomplishements of a 400mA circuit, related to the figures which features:
Figure 1. Ideal shapes of current sink from the grid, respectively supplied to the LEDs
Figure 2. Current to voltage feature of a white HB-HP LED
Figure 3. Harmonics limits mandatory as per EN61000-3-2 [IEC1000-3-2]
Figure 4. Time domain shapes of sink currents compliant with EN61000-3-2
Figure 5. General simplified schematic diagram of the apparatus
Figure 6. Sink current shapes employing a constant current source
Figure 7. Sink current shapes employing the AM current source
Figure 8. Harmonic spectrum of the sink current employing the AM current source sized for minimum CF
Figure 9. Harmonic spectrum of the sink current employing the AM current source sized for highest efficiency
Figure 10. Sink current shapes employing the PWM current source
Figure 11. Harmonic spectrum of the sink current employing the PWM current source sized for minimum CF.
Figure 12. Harmonic spectrum of the sink current employing the PWM current source sized for highest efficiency
Figure 13. Sink current shapes employing intrinsec PWM current source
Figure 14 Harmonic spectrum of the sink current employing the intrinsec PWM current source sized for minimum CF.
Figure 15. Harmonic spectrum of the sink current employing the intrinsec PWM current source sized for highest efficiency.
Figure 16. Simplified schematic diagram of an example stabilized intrinsec PWM
Figure 17. Sink current shapes employing the stabilised intrinsec PWM current source
Figure 18. Harmonic spectrum of the sink current employing the stabilised intrinsec PWM current source sized for minimum CF.
Figure 19 Harmonic spectrum of the sink current employing the stabilised intrinsec PWM current ource sized for hightest efficiency
Figure 20 Sink current shapes employing the random modulated current source
Figure 21 Harmonic spectrum of the sink current employing the random modulated current source sized for minimum CF
Figure 22 Harmonic spectrum of the sink current employing the random modulated current ource sized for highest efficiency

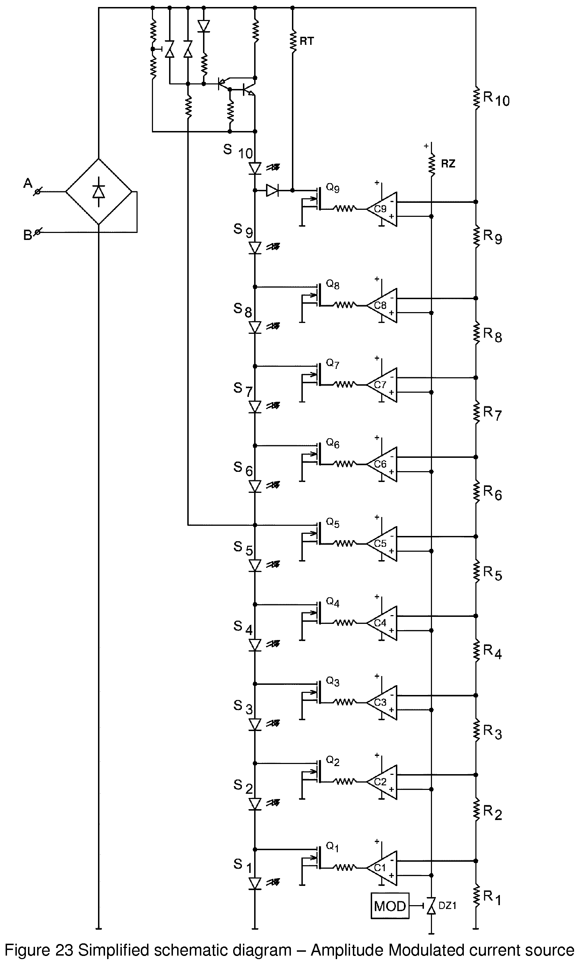

Figure 23 Detailed schematic diagram - AM current source

The electrical schematic diagram in Figure 5, includes a rectifier bridge RB with its positive output series-connected to the anode of a constant current source CCS whose cathode is series-connected to the anode of a string of LEDs series connected and divided into multiple segments S10, S9,..., S1, whose cathode is finally connected to the negative output of the rectifier bridge RB, a number of switches controlled by an equal number of comparator circuits C9, C8,...C1, set in parallel on each segment, except on the first segment S10 that is series-connected to the current source CCS, resistive voltage dividers R10, R9, ...R1, set between the positive and negative outputs of the rectifier bridge RB, which establish the voltage thresholds to which the switches are driven, a reference voltage generator DZ1, a modulation circuit MOD 1 of the current source CCS and a modulation circuit MOD 2 of the reference voltage generator DZ1.

Upon connecting a 230V_{eff} alternative voltage U_{AB} between terminal A and B of the circuit, the alternative voltage is full wave rectified by the rectifier bridge RB and is applied to the series of NxM luminiscent diodes [LED], series-fitted and grouped in N series of M diodes through the constant current source CCS. For a 230V_{ac} +/- 10% grid, the peak rectified voltage [Uₘₐₓ] is of approximately 356V, thus defining the necessary total number [N x M]ₘᵢₙ of LEDs.

Bearing in mind that the voltage drop on a white HB-HP LED, at a current of 1A, is around 3.6-3.7V and taking into account the [negative] thermo drift of approximately - 3mV/grd Celsius, it appears that for the safe operation up to a temperature of the LED junction Tj=100 degree centigrades [N x M] = 96. I choose [N x M] = 100 LEDs that I group in 10 segments of 10 LEDs each, the choice being sustained by the regular presence of light engines made by 100 LEDs and grouped in a sole COB [Chip On Board] in the 10x10 topology. Sizing of the segment number results from an efficiency calculation, which does not represent the ground of this application and based on which the less segments, the less efficiency. As a matter of example, for 100 LEDs divided into 5 equal segments, the theoretical maximum efficiency trends to 95% and for 100 LEDs divided into 10 equal segments, it trends to 99.99%.

Bearing in mind the treshold voltage of a white HB-HP LED is of approximately 2.4V and choosing the LED number in the first segment [numbered S10], that is series-connected the current source CCS equal to 10, I established in fact the "no-light" time frame: For 10 LEDs the apparatus starts to lit at 0.28ms after the zero crossing of grid voltage.

In order to describe the operation, I reckon the current source is unmodulated so that it sink a constant current of 400mA, the spectrum scattering modulator of the reference voltage is inactive, as well as upon connecting the supply voltage U_{AB} at AB terminals, the grid voltage passes through zero. Furthermore, I reckon that at AB terminals, an 230V_{ef} and 50Hz alternative sinusoidal voltage is applied.

Upon increasing the U_{AB} voltage from 0 volts to 28.5V [10 LED x 2.85V = 28.57V], the current sink by the apparatus is zero. Hereinafter, given the Q9 tranzistor which bypasses segments S1...S9 is staturated open, the schematic comprises the rectifier bridge RB series-connected to the current source CCS and a single S₁₀ segment consisting of 10 LEDs in series, the current sink through the apparatus [which is equal to the current through segment S₁₀] increases exponentially along with the applied voltage, up to 400mA where it is limited by the constant current source CCS. The presence in series with S₁₀ of the constant current source CCS with a fixed value of 400mA, limits the maximum voltage drop on the segment S₁₀ to approximately 34V, which is the voltage drop of 10 series-connected LEDs at 400mA through. Thus, for the U_{AB} between 0 and 28.5V, the whole grid voltage drop on segment S₁₀; voltage drop on S₁₀ increases to 34V and then remain constant, given the presence of the constant current source CCS in series. Any further U_{AB} increase drop on the constant current source CCS.

When the voltage at the AB terminals reaches the first switching threshold set by the R10 and R9+...+R1 resistive dividers, the C₉ comparator puts Q₉'s gate to zero potential, switching it off. Switching off Q₉ introduces the segment S₉ in series with S₁₀ as the segments S₈-S₁ are bypassed by Q₈ which is saturated open, the current through the circuit will be lower than 400mA and it will be set by U_{AB} divided to 20 luminiscent diodes fitted in series, respectively by their current to voltage curve.

Upon further increase of the U_{AB} voltage, the current through S₁₀+S₉ increases exponentially until it reaches again 400mA, being limited by the constant current source CCS. As soon as the current through S₁₀+S₉ reach 400mA, the voltage drop on S₁₀+S₉ stay constant and limited to approximately 68V, the whole further increase of the U_{AB} dropping on the constant current source CCS. Upon exceeding the next threshold value set by R₁₀+R₉ and R₈ + ... +R₁, the comparator C₈ switch off transistor Q₈ and thus introduces the segment S₈ in series with S₁₀ and S₉.

Hereinafter, upon consecutive excess of the threshold values set by R₁, ... R₁₀, the schematic successively introduces in series with the already existing segments, additional segments taking over a part of the current adjustment duty of the constant current source CCS.

Upon negative variation of the voltage at AB terminals, the process is carried out in reverse, upon decrease of U_{AB} below the pre-set threshold levels, the schematic is taking out consecutively a segment of LEDs from the LED series by its bypassing with the appropriate transistor.

Introducing respectively removing from the circuit of segments S₁... S₉ can be done via various methods, the operating principle remaining the same. Optionally, the value of R₁₀ resistor can have a positive temperature coeficient [PTC] and compensate for the negative drift with the temperature of the voltage drop on the LEDs.

By sizing the switching thresholds, CF glides from CFₘₐₓᵢₘ to CFₘᵢₙᵢₘ, as follows: by setting the first threshold to 2 x 34V=68V and the next ones succesively increased by 34V, CF goes to CFₘᵢₙᵢₘ = 1.12 and the theroretical efficiency of the conversion goes to 92,65%. Gradually decreasing the 34V tresholds the theoretical efficiency increases towards 99.98% on the account of CF which grows worse up to 2.5. For the 400mA current set by the constant current source CCS, the power sunk from the network varies between 81.84W for CF=1.12 and 40.88W for CF=2.25.

Through the above described gradual switch we managed to get a series of quasi-rectangular current pulses amplitude limited to 400mA going through the LEDs; the current pulses are approximately rectangular, rising in approximately 0.3ms after the zero crossing of grid voltage and falling at some 9.7ms. The shapes of the sink current pulses in the two extreme cases and namely the maximum efficiency respectively the maximum CF are depicted in Figure 6.

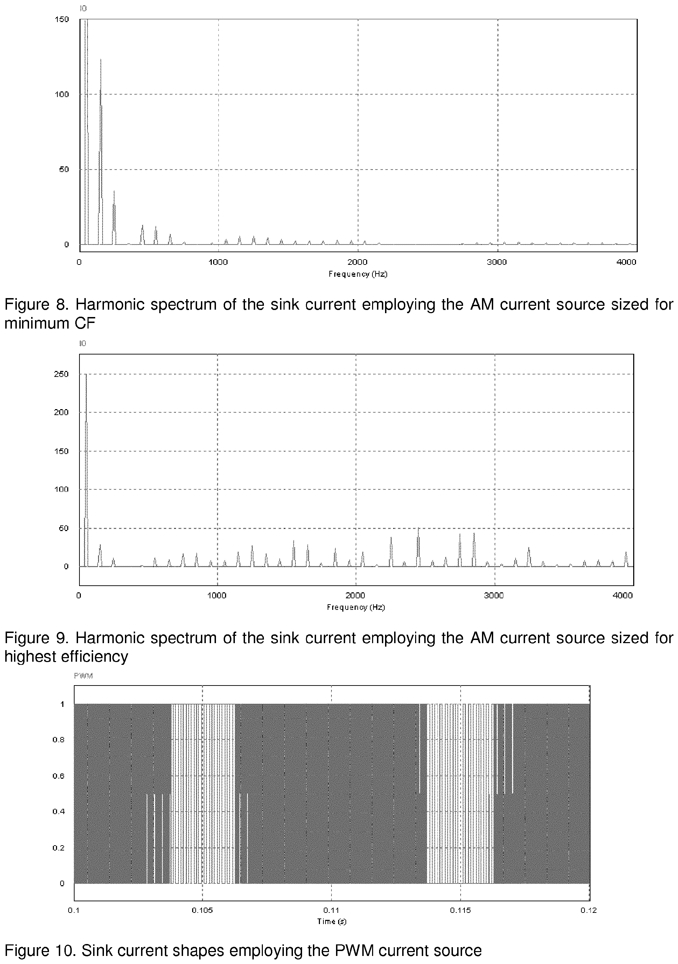

Yet in order to comply with EN61000-3-2 requirements the real time or the mean envelope of sink current must follow the "i trapezoid" law depicted in Figure 4. This envelope can be got by modulating the current sunk by the current source in the above indicated 4 ways, whose completion and operating is hereinafter detailed:
To shape the envelope of the sink current in real time, the amplitude of the constant current source CCS has to be amplitude modulated; The technical solutions of AM are classical, they can be achieved analogic or digital, liniar of controlled by a microprocessor and in phase with the network voltage. The shape of AM sink current is depicted in Figure 7. The harmonic spectrum of the AM sink current for CFₘᵢₙᵢₘ is displayed in Figure 8 and the harmonic spectrum of the AM sink current for maximum efficiency is displayed in Figure 9.

The theoretical and calculated maximum efficiency of the apparatus is 99.94% for a CF = 2.27 and respectively for a 40.61W sink from the grid and drops to 93.10% for CFₘᵢₙᵢₘ = 1.16, in which case the power sunk from the grid increases to 79.55W. The harmonic distortion [THD] of the signal in Figure 8 is 26.5% and subsequently the power factor, FP=0.97.

As noticed in Figure 9, the spectrum of the sink current at maximum efficiency is not EN61000-3-2 compliant, its harmonics in the 1kHz to 3kHz area being higher than the mandatory up limits, wherefore additional measures need to be taken to lower them. Taking into consideration that the non complying harmonics have a relatively low frequency, filtering is not an option [at 3kHz the filters are big, bulky and expensive], thus the most convenient lowering solution is via spreading the spectrum. From the technical perspective spectrum spreading is [a] carried out easily, by modulating the reference voltage with a frequency non-correlated to the network frequency and which by the statistical point of view is a modulation by a random signal, respectively is [b] highly affective, reducing the harmonic amplitudes by some 8dB which is enough to make the signal compliant. However, this EN61000-3-2 compliance is achieved just for the mean amplitude of harmonics, their instant amplitudes being still off limits. As long as certifying laboratories evaluate the EN61000-3-2 compliance on mean values, the methode stays effective.

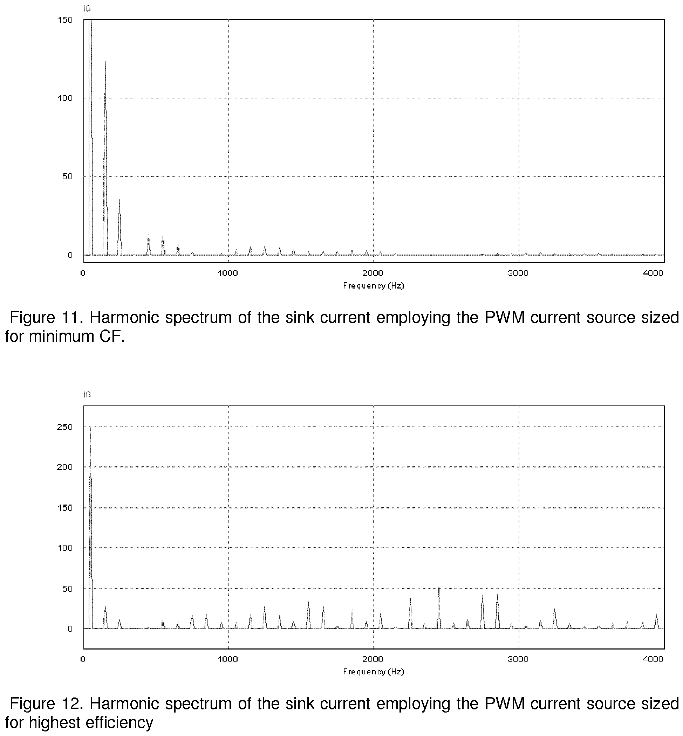

The envelope of the sink current can be modified by HF PWM modulation between 0ms and 1.4ms interval, respectively between 8.6ms and 10ms of each half cycle of the AC grid voltage, keeping the amplitude constant. The PWM variation law has a rising slope twice the slope of sine function on the intervals of interest and it follows the "i trapezoid" in Figure 4. The current sink from the grid is presented in Figure 10 and its spectrums on the two extreme conditions, of CF maximum and respectively by the high efficiency, are presented in Figure 11, respectively Figure 12. Given that the PWM modulation frequency is higher [scores tens of kHz, MHz] than the highest harmonic observed by EN61000-3-2 [harmonic 39 or 4kHz], the low frequency spectrums of currents sink from the grid by PWM modulation are identic with the spectrum of AM modulated sink current. The calculated maximum efficiency of the apparatus is 99.98% for a CF = 2.26 and for a power sink from the grid of 40.61W, respectively it drops to 92.50% for CFₘᵢₙᵢₘ = 1.16 and a power sink from the grid of 79.55W. The total THD of the curent showed in Figure 11 is some 26.5% and its subsequent power factor FP=0.97.

Just as for the AM, the sink current spectrum of the higher efficiency apparatus is not compliant with EN61000-3-2 between 1kHz and 3kHz and wherefore the same additional measures to reduce the harmonic components by spreading their spectrum need to be taken. Additionally to the AM, the PWM generates high frequency harmonics [around the modulation frequency and its multiples], harmonics that should be filtered out.

Taking notice the rectangular sink current pulse is made by the addition of 10 shorter pulses and taking notice that the EN61000-3-2 rigors can be fulfilled by modulating the sink current only between 0ms and 1.4ms, respectively between 8.6ms and 10ms for each half cycle of a 50Hz grid voltage, it immediatelly results that by choosing wisely the first 3 switching thresholds the schematic can produce these 3 pulses with fluctuant duration, exactly in the intervals of interest, namely 0ms to 1.4ms and 8.6 to 10ms. This modus vivendi is in fact an "intrinsec PWM modulation".

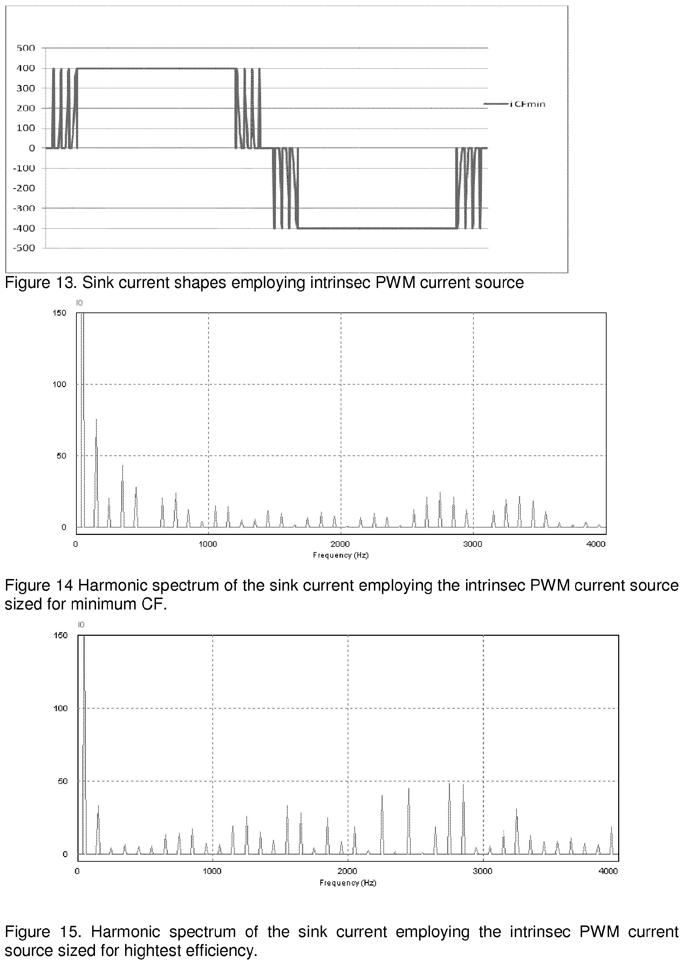

The shape of the sink current in the two cases, CFₘᵢₙᵢₘ or the highest efficiency are shown in Figure 13 and their spectrum in Figure 14 respectively Figure 15. The calculated maximum efficiency is 99.98% for a CF = 2.25 and a power of 40.88W, respectively the calculated efficiency drops to 93.97% for CFₘᵢₙᵢₘ = 1.20, in which case the sunk power is 76.53W. The THD of the signal in Figure 14 is 28% and subsequently the power factor is FP=0.96

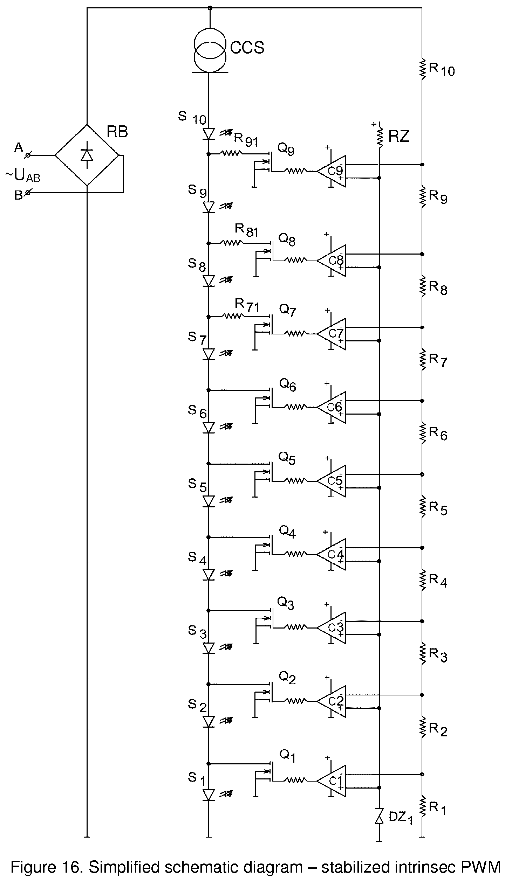

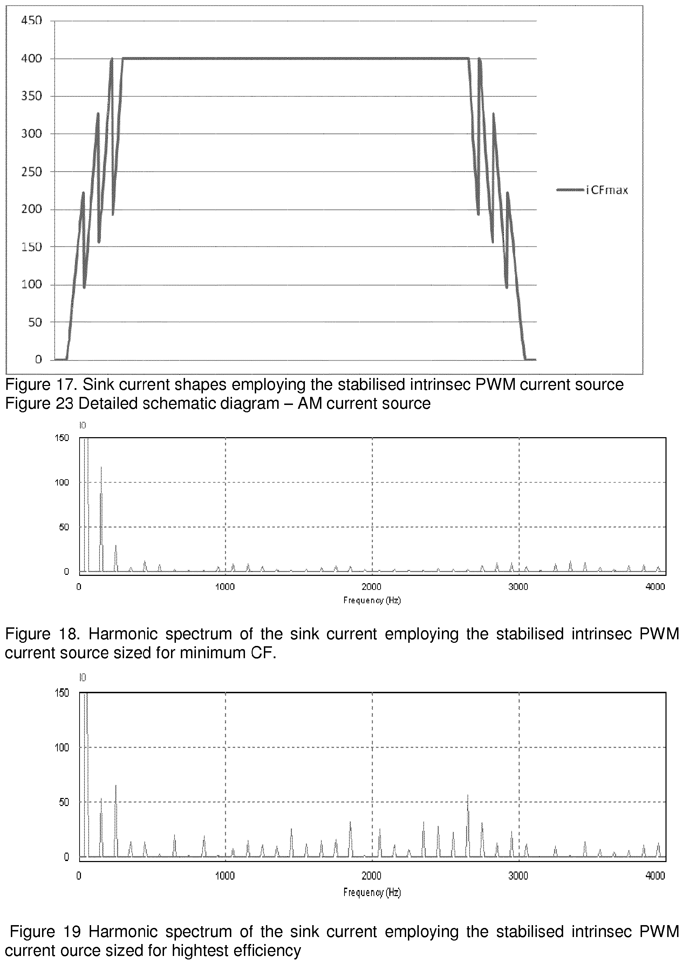

Although the appropriate arrangement solution of the first three segment switching thresholds [intrinsic PWM modulation] is simple and attractive, the high sensitivity of the mean current slope generates results [efficiency, CF and compliance with the harmonic emission standard] that are sensitive by temperature variation and network voltage variation. To stabilise the results I introduce resistors in series with the first three switches as indicated in the simplified stabilised schematic on Figure 16. By serializing R₇₁, R₈₁ and R₉₁ with the MOS drains, the shape of sink current in case of CFₘᵢₙᵢₘ becomes pronouncedly trapezoidal, insensitive to switching threshold variation and is depicted in Figure 17; the subsequent sink current spectrums in case of CFₘᵢₙᵢₘ, respectively the high efficiency, are showed in Figure 18, respectively Figure 19. For U_{LED}<3.0V one additional resistor should be added. The calculated maximum efficiency of the apparatus is 99.58% for a CF=2.27 and a sunk power of 41.58W, respectively the calculated efficiency drops to 93.57% for a CFₘᵢₙᵢₘ= 1.17 and for a sunk power of 78.76W. The THD of the signal in Figure 18 [CFₘᵢₙᵢₘ] is 26.5% and subsequently the power factor FP=0.97

As it was noticed, hereinafter the spectrums in case of high efficiency are not compliant with the EN61000-3-2 limits, therefore additional measures need to be taken in order to decrease the amplitudes of harmonic components, the solution being the same as in the previous options, by spreading them via random modulation of reference voltage.

The last mean current modulation possibility identified is the rectangular current pulse length modulation by a random signal whose distribution law is constant 0 and 1.4ms, respectively between 8.6 and 10ms, for each half cycle of the 50Hz grid voltage and equal 1 in rest.

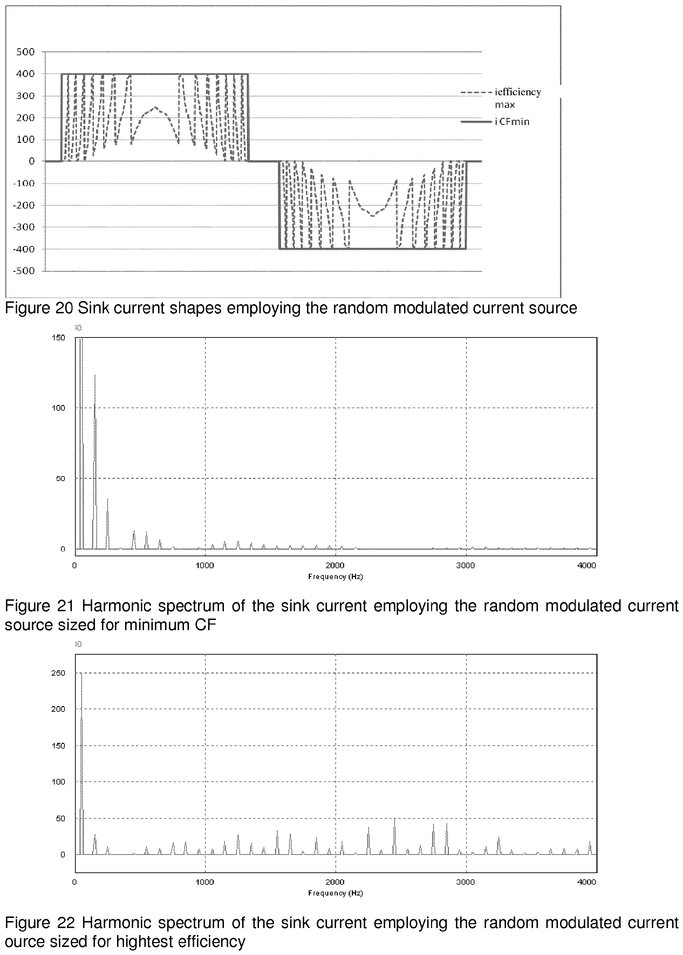

The wave forms of the sink current showed in Figure 20, and their spectrums in Figure 21 and Figure 22 respectively. The maximum calculated efficiency is 99.98% for CF = 2.26 and respectively the sunk power 40.6W and it drops to 94.16% for CFₘᵢₙᵢₘ = 1.15, in which case the sunk power goes to 80.10W. The harmonic spectrums in case of high efficiency are not compliant with the EN61000-3-2 limits and wherefore the same spectrums spreading measures need to be taken.

The synthesis of the maximum parameters obtainable in theory via the identified 4+1 modulation options, is:

| | i source [mA] | CF | efficiency [%] | Sink power [W] |
|---|---|---|---|---|
| Base rectangular pulse | 400 | 1.12 | 92.65 | 81.84 |
| Amplitude Modulation | 400 | 1.16 | 93.10 | 79.55 |
| HF PWM | 400 | 1.16 | 92.50 | 79.55 |
| Intrinsic [LF] PWM | 400 | 1.20 | 93.97 | 76.53 |
| Stabilised intrinsic PWM | 400 | 1.17 | 93.57 | 78.76 |
| Random Modulation | 400 | 1.15 | 94.16 | 80.10 |
| | | | | |
| Base pulse | 400 | 2.25 | 99.98 | 40.88 |
| Amplitude Modulation | 400 | 2.27 | 99.94 | 40.61 |
| HF PWM | 400 | 2.26 | 99.90 | 40.61 |
| Intrinsic [LF] PWM | 400 | 2.25 | 99.98 | 40.88 |
| Stabilised intrinsic PWM | 400 | 2.27 | 99.58 | 41.58 |
| Random Modulation | 400 | 2.26 | 99.98 | 40.61 |

As a matter of course, asserting CF to be minimum, the best parameters are obtained upon the random modulation of the base rectangular pulse. It is also observed that irrespective of the modulation method, CF varies slightly between 1.12 and 1.20, respectively the efficiency between 92.65% and 94.16% and the sunk power between 76.53W and 81.84W. Under these circumstances it is obvious that the decision of choosing one or the other modulation options is economical, based on the simplicity of the electric scheme and the necessary or un-necessary additional filtering measures. In my opinion the stabilised intrinsic modulation option employing a un-modulated constant current source is one of the two winning solutions, the practical implementation of the components at retail prices having a cost around USD5. Amplitude modulation option is also simple, competing in terms of simplicity and cost with the stabilised intrinsec PWM. All other solutions are best fit in case of driver integration onto a dedicated mixt signal ASIC.

Also in case of an acceptable high CF, it is noticed that the parameters are grouped: CF between 2.25 and 2.27, all efficiencies above 99.5% and the absorbed power between 40.6W and 41.6W. In this option where spreading of spectrum si mandatory, the best fit appear to be the random modulation option of the base rectangular pulse. A special note needs to be made: in order to obtain 40W, the LEDs must endure a current that is 2.25 x bigger than the constant current necessary to obtain the 40W, if they were supplied with classical power sources.

## Claims

1. Apparatus for supplying a string of LEDs directly from an AC power grid voltage (U_{AB}) providing 230V_{ef} and 50Hz alternating sinusoidal voltage, said apparatus comprising :
- a constant curent source (CCS),
- the string of LEDs series-connected and divided into multiple segments (S10, S9,..., S1), each of the multiple segments (S10, S9, ..., S1) in series having a certain number of LEDs,
- a rectifier bridge (RB) whose positive output is series-connected to the anode of the constant current source (CCS),
- the cathode of the constant current source (CCS) is series-connected to the anode of the string of LEDs
- the cathode of the LED string is series-connected to the negative output of the rectifier bridge (RB),
- comparators (C9, C8, ..., C1),
- transistors (Q9, Q8,..., Q1) whose switching is respectively controlled by one of the comparators (C9, C8, ..., C1), wherein a respective voltage threshold, having a pre-set threshold value, determines the switching of the respective transistor (Q9, Q8,..., Q1) wherein the comparators (C9, C8, ..., C1) and the transistors (Q9, Q8, ..., Q1) are formed in pairs,
- each pair consisting of one of the transistors (Q9, Q8,..., Q1) and one of the comparators, each comparator (C9, C8, ...,C1) (C9, C8, ..., C1) controlling the respective transistor which is parallel-connected to a respective one of the multiple segments (S10, S9,..., S1), except for the first segment (S10) which is series-connected with the constant current source (CCS),
- resistive voltage dividers (R10, R9, ..., R1) connected between the positive and negative outputs of the rectifier bridge (RB), said resistive voltage dividers (R10, R9, ..., R1) being able to establish the voltage thresholds,
- a reference voltage generator (DZ1, being coupled to each of the comparators (C9, C8, ..., C1);
- a first modulation circuit (MOD 1) of the constant current source (CCS), able to modulate the sink current of the constant current source (CCS),
- a second modulation circuit (MOD 2) of the reference voltage generator (DZ1), configured to
- when the AC power grid voltage (U_{AB}) exceeds the respective pre-set threshold values, the transistors (Q9, Q8,..., Q1) are consecutively switched off, thus consecutively introducing, in series with the constant current source (CCS) and with at least the first segment (S10) already present in the series, one of the segments (S9, S8, ..., S1 as additional segment, the additional segment takes over a part or all of the constant current source voltage drop,
- upon decrease of the AC power grid voltage (U_{AB}) below the respective pre-set threshold value, the transistors (Q9, Q8,..., Q1) are consecutively switched on, thus consecutively taking out of the series one of the segments (S9, S8, ..., S1), except for the first segment (S10),
**characterized in that** the first modulation circuit is adapted to modulate a mean sink current of the constant current source (CSS), whereby the mean sink current has, in each 10 ms half cycle of the AC power grid voltage (U_{AB}), a linear increase between 0 ms -1.4 ms, with a slope twice as big as the slope of the 50Hz alternating sinusoidal voltage on the same time frame, is flat between 1.4 ms - 8.6 ms, and has a linear decrease between 8.6 ms - 10 ms, with a slope twice as big as the slope of the 50Hz alternating sinusoidal voltage on the same time frame.

2. Method of supplying a string of LEDs powered directly from an AC power grid voltage (U_{AB}) providing 230V_{ef} and 50Hz alternating sinusoidal voltage, comprising the following steps:
a) providing an apparatus according to the preamble of claim 1,
**characterized in that** the method comprises the further step of
b) modulating the sink current of the constant current source (CCS) by means of the first modulation circuit (MOD1) of the constant current source (CCS), such that the mean sink current has, in each 10 ms half cycle of the AC power grid voltage (U_{AB}), a linear increase between 0 ms -1.4 ms, with a slope twice as big as the slope of the 50Hz alternating sinusoidal voltage on the same time frame, is flat between 1.4 ms - 8.6 ms, and has a linear decrease between 8.6 ms - 10 ms, with a slope twice as big as the slope of the 50Hz alternating sinusoidal voltage on the same time frame.

## Patentansprüche

1. Vorrichtung zum direkten Zuführen einer Reihe von LEDs aus einem Wechselspannungsnetz (U_{AB}), die 230V_{ef} und 50Hz Sinuswechselspannung liefert, wobei die Vorrichtung aufweist:
- Eine Konstantstromquelle (CCS),
- Die Reihe von LEDs, die in Reihe verbunden und in mehrere Segmente (S10, S9,..., S1) unterteilt sind, wobei jedes der mehreren Segmente (S10, S9,..., S1) in reihe eine bestimmte Anzahl von LEDs aufweist,
- Eine Gleichrichterbrücke (RB) deren positiver Ausgang mit der Anode der Konstantstromquelle (CCS) in Reihe verbunden ist,
- Die Kathode der Konstantstromquelle (CCS) ist in Reihe mit der Anode der Reihe von LEDs verbunden,
- Die Kathode der Reihe von LEDs ist in Reihe mit dem negativen Ausgang der Gleichrichterbrücke (RB) verbunden,
- Komparatoren (C9, C8, ..., C1),
- Transistoren (Q9, Q8,..., Q1) deren Schalten von einem der Komparatoren (C9, C8, ..., C1) gesteuert wird, wobei eine jeweilige Spannungsschwelle, die einen voreingestellten Schwellenwert aufweist, das Schalten des jeweiligen Transistors (Q9, Q8,..., Q1) bestimmt, wobei die Komparatoren (C9, C8,..., C1) und die Transistoren (Q9, Q8,...,Q1) paarweise ausgebildet sind,
- Jedes Paar bestehend aus einem der Transistoren (Q9, Q8,..., Q1) und einem der Komparatoren (C9, C8, ..., C1), wobei jeder Komparator (C9, C8, ..., C1) den jeweiligen Transistor, der parallel zu einem jeweiligen der mehreren Segmente (S10, S9,..., S1) verbunden ist, mit Ausnahme des ersten Segments (S10), das in Reihe mit der Konstantstromquelle (CCS) verbunden ist, steuert,
- Widerstandsspannungsteiler (R10, R9, ..., R1), die zwischen den positiven und negativen Ausgängen der Gleichrichterbrücke (RB) verbunden sind, wobei die Widerstandsspannungsteiler (R10, R9, ..., R1) in der Lage sind, die Spannungsschwellen festzulegen,
- Ein Referenzspannungsgenerator (DZ1) der mit jedem der Komparatoren (C9, C8,..., C1) gekoppelt ist;
- Eine erste Modulationsschaltung (MOD1) der Konstantstromquelle (CCS), die in der Lage ist den Senkenstrom der Konstantstromquelle (CCS) zu modulieren,
- Eine zweite Modulationsschaltung (MOD2) des Referenzspannungsgenerators (DZ1), konfiguriert dafür
- Wenn das Wechselspannungsnetz (U_{AB}) die jeweils voreingestellten Schwellenwerte überschreitet, werden die Transistoren (Q9, Q8,..., Q1) nacheinander abgeschaltet, so dass nacheinander in Reihe mit der Konstantstromquelle (CCS) und mit mindestens dem ersten Segment (S10) das bereits in der Reihe vorhanden ist, eines der Segmente (S9, S8,..., S1) als zusätzliches Segment eingeführt ist, übernimmt das zusätzliche Segment einen Teil oder den gesamten Spannungsabfall der Konstantstromquelle (CCS),
- Wenn das Wechselspannungsnetz (U_{AB}) unter den jeweiligen voreingestellten Schwellenwert abgesenkt wird, werden die Transistoren (Q9, Q8,..., Q1) nacheinander eingeschaltet, so dass nacheinander die Reihe eines der Segmente (S9, S8, ..., S1), mit Ausnahme des ersten Segments (S10) ausgeführt wird,
**dadurch gekennzeichnet dass**
die erste Modulationsschaltung dazu angepasst ist, um einen mittleren Senkenstrom der Konstantstromquelle (CCS) zu modulieren, wobei der mittlere Senkenstrom in jedem 10 ms Halbzyklus des Wechselspannungsnetzes (U_{AB}) einen linearen Anstieg zwischen 0 ms -1,4 ms aufweist, mit einer Steigung die doppelt so groß ist als die Steigung der 50 Hz Sinuswechselspannung im gleichen Zeitrahmen, die zwischen 1,4 ms - 8,6 ms flach ist und eine lineare Abnahme zwischen 8,6 ms - 10 ms aufweist, mit einer Steigung die doppelt so groß ist als die Steigung der 50 Hz Sinuswechselspannung im gleichen Zeitrahmen.

2. Verfahren zum Liefern einer Reihe von LEDs, welche direkt über ein Wechselspannungsnetz (U_{AB}) gespeist wird und welche 230V_{ef} und 50Hz Sinuswechselspannung liefert, umfassend die folgenden Schritte:
a) Bereitstellen einer Vorrichtung gemäß dem Oberbegriff des Anspruchs 1,
**dadurch gekennzeichnet, dass** das Verfahren den weiteren Schritt umfasst
b) Modulation des Senkenstroms der Konstantstromquelle (CCS) mittels der ersten Modulationsschaltung (MOD1) der Konstantstromquelle (CCS), so dass
der mittlere Senkenstrom in jedem 10 ms Halbzyklus des Wechselspannungsnetzes (U_{AB}) einen linearen Anstieg zwischen 0 ms -1,4 ms aufweist, mit einer Steigung die doppelt so groß ist als die Steigung der 50 Hz Sinuswechselspannung im gleichen Zeitrahmen, die zwischen 1,4 ms - 8,6 ms flach ist und eine lineare Abnahme zwischen 8,6 ms - 10 ms aufweist, mit einer Steigung die doppelt so groß ist als die Steigung der 50 Hz Sinuswechselspannung im gleichen Zeitrahmen.

## Revendications

1. Appareil pour alimenter une chaîne de diodes électroluminescentes (LEDs) directement à partir d'une tension du réseau électrique CA (CA - courant alternatif) (U_{AB}) fournissant une tension sinusoïdale alternative de 230V_{ef} et 50Hz, ledit appareil comprenant:
- une source de courant constant (CCS),
- la chaîne de LEDs connectées en série et divisées en plusieurs segments (S10, S9, ..., S1), chacun des multiples segments (S10, S9, ..., S1) en série comportant un certain nombre de LEDs,
- un pont redresseur (RB) dont la sortie positive est connectée en série à l'anode de la source de courant constant (CCS),
- la cathode de la source de courant constant (CCS) est connectée en série à l'anode de la chaîne de LEDs,
- la cathode de la chaîne de LED est connectée en série à la sortie négative du pont redresseur (RB),
- des comparateurs (C9, C8, ..., C1),
- des transistors (Q9, Q8,..., Q1) dont la commutation est respectivement commandée par l'un des comparateurs (C9, C8, ..., C1), où un seuil de tension associé, ayant une valeur de seuil prédéfinie, détermine la commutation du transistor associé (Q9, Q8,..., Q1) où lequel les comparateurs (C9, C8,..., C1) et les transistors (Q9, Q8,..., Q1) sont formés par paires,
- chaque paire constituée d'un des transistors (Q9, Q8,..., Q1) et d'un des comparateurs (C9, C8, ..., C1), chaque comparateur (C9, C8, ..., C1) commandant le transistor associé qui est connecté en parallèle à l'un des segments multiples associés (S10, S9, ..., S1), sauf le premier segment (S10) qui est connecté en série avec la source de courant constant (CCS),
- des diviseurs de tension résistifs (R10, R9, ..., R1) connectés entre les sorties positives et négatives du pont redresseur (RB), lesdits diviseurs de tension résistifs (R10, R9, ..., R1) étant capables d'établir les seuils de tension,
- un générateur de tension de référence (DZ1) étant couplé à chacun des comparateurs (C9, C8, ..., C1);
- un premier circuit de modulation (MOD 1) de la source de courant constant (CCS), capable de moduler le courant absorbé de la source de courant constant (CCS),
- un deuxième circuit de modulation (MOD 2) du générateur de tension de référence (DZ1), configuré pour
- lorsque la tension du réseau électrique CA (U_{AB}) dépasse les valeurs de seuil prédéfinies associés, les transistors (Q9, Q8,..., Q1) sont bloqués consécutivement, introduisant ainsi, en série avec la source de courant constant (CCS) et avec au moins le premier segment (S10) déjà présent dans la série, l'un des segments (S9, S8, ..., S1) en tant que segment supplémentaire, le segment supplémentaire prend en charge une partie ou la totalité de la chute de tension de la source de courant constant (CCS),
- lors de la diminution de la tension du réseau électrique CA (U_{AB}) au-dessous de la valeur de seuil prédéfinie associée, les transistors (Q9, Q8,..., Q1) les transistors deviennent conducteurs consécutivement, sortant ainsi consécutivement de la série l'un des segments (S9 , S8, ..., S1), sauf le premier segment (S10),
**caractérisé en ce que**
le premier circuit de modulation est adapté pour moduler un courant absorbé moyen de la source de courant constant (CSS), le courant absorbé moyen ayant, dans chaque demi-cycle de 10 ms de la tension de réseau électrique CA (U_{AB}), une croissance linéaire entre 0 ms - 1,4 ms, avec une pente deux fois plus grande que la pente de la tension sinusoïdale alternative de 50 Hz sur la même trame temporelle, est plat entre 1,4 ms - 8,6 ms et a une décroissance linéaire entre 8,6 ms - 10 ms, avec une pente deux fois plus grande que la pente de la tension sinusoïdale alternative de 50 Hz sur la même trame temporelle.

2. Méthode d'allimentation d'une chaîne de LEDs alimentés directement par une tension de réseau électrique CA (U_{AB}) fournissant une tension sinusoïdale alternative de 230V_{ef} et 50Hz, la méthode comprenant les étapes suivantes:
a) fournir un appareil selon le préambule de la revendication 1,
**caractérisé en ce que** la méthode comprend l'étape supplémentaire de
b) modulation du courant absorbé de la source de courant constant (CCS) au moyen du premier circuit de modulation (MOD1) de la source de courant constant (CCS), tel que
le courant absorbé moyen a, dans chaque demi-cycle de 10 ms de la tension de réseau électrique CA (U_{AB}), une augmentation linéaire entre 0 ms -1,4 ms, avec une pente deux fois plus grande que la pente de la tension sinusoïdale alternative de 50 Hz sur la même trame temporelle, est plat entre 1,4 ms - 8,6 ms et a une décroissance linéaire entre 8,6 ms - 10 ms, avec une pente deux fois plus grande que la pente de la tension sinusoïdale alternative de 50 Hz sur la même trame temporelle.
